# EUROPEAN PATENT SPECIFICATION

(11) **EP 1 843 944 B1**
(45) Date of publication and mention of the grant of the patent: **18.11.2009**
(21) Application number: 06845583.1
(22) Date of filing: 15.12.2006
(51) Int. Cl.: A63H 27/133, B64C 27/43, B64C 27/82, B64C 27/625, B64C 27/467

(54) **HELICOPTER**
HELIKOPTER
HELICOPTERE

(30) Priority: 19.01.2006 BE 200600043; 03.08.2006 US 462177; 18.08.2006 US 465781
(43) Date of publication of application: 17.10.2007
(73) Proprietor: Silverlit Toys Manufactory Ltd, Hong Kong (HK)
(72) Inventor: VAN DE ROSTYNE, Alexander, Jozef Magdalena, B-2880 Bornem (BE)
(74) Representative: Petraz, Gilberto Luigi
(86) International application number: PCT/US2006/047984
(87) International publication number: WO 2007/084234

(56) References cited:
- DE-A1- 4 017 402
- DE-U1- 9 414 652
- GB-A- 255 936
- GB-A- 956 536
- US-A- 1 403 909
- US-A- 5 749 540
- US-A- 5 879 131
- US-A- 5 906 476
- US-A1- 2002 134 883
- US-A1- 2004 184 915
- US-B1- 6 460 802

## Description

### BACKGROUND

The present disclosure concerns an improved helicopter.

The disclosure concerns a helicopter generally. In particular, but not exclusively it is related to a toy helicopter, and in particular to a remote-controlled model helicopter or a toy helicopter.

### SUMMARY

It known that a helicopter is a complex machine which is unstable and as a result difficult to control, so that much experience is required to safely operate such helicopters without mishaps.

Typically, a helicopter includes a body, a main rotor and a tail rotor.

The main rotor provides an upward force to keep the helicopter in the air, as well as a lateral or forward or backward force to steer the helicopter in required directions. This can be by making the angle of incidence of the propeller blades of the main rotor vary cyclically at every revolution of the main rotor.

The main rotor has a natural tendency to deviate from its position, which may lead to uncontrolled movements and to a crash of the helicopter if the pilot loses control over the steering of the helicopter.

Solutions to slow down the effect have already been provided up to now, including the application of stabilizing rods and weights at the tips of the propeller blades.

All these solutions make use of the known phenomenon of gyroscopic precession, caused by the Coreolis force and the centrifugal forces, to obtain the desired effect.

The tail rotor is not at all insensitive to this phenomenon, since it has to prevent the body to turn round the drive shaft of the rotor as a result of the resistance torque of the rotor on the body.

To this end, the tail rotor is erected such that it develops a lateral thrust which has to counteract the above-mentioned resistance torque of the rotor, and the helicopter is provided with means which have to enable the pilot to control the lateral thrust so· as to determine the flight position round the vertical axis.

Since the tail of the helicopter tends to turn round the drive shaft of the main rotor, even in case of small variations in the drive torque of the main rotor, most helicopters are provided with a separate and autonomous mechanical or electromechanical system such as a gyroscope or the like, which automatically compensates the thrust of the tail rotor for the unwanted rotations.

In general, the stability of a helicopter includes the result of the interaction between:
- the rotation of the rotor blades; the movements of any possible stabilizing rods; compensation of the resistance torque of the main rotor by means of the tail rotor;
   the system such as a gyroscope or the like to compensate for small undesired variations in the resistance torque of the main rotor; and
   control of the helicopter which controls the rotational speed of the main rotor and of the tail rotor.

When these elements are essentially in balance the pilot should be able to steer the helicopter as desired.

This does not mean, however, that the helicopter can fly by itself and can thus maintain a certain flight position or maneuver, such as for example hovering or making slow movements, without the intervention of a pilot.

Moreover, flying a helicopter usually requires intensive training and much experience of the pilot, for both a full size operational real helicopter as well as a toy helicopter or a remote-controlled model helicopter.

Document US-A-5,906,476 discloses a main rotor system for helicopters having the features described in the preamble of claim 1 of the present application. This known system comprises a swashplate including a bearing, a first race member including a channel, a second race member including a channel, and a third race member including a channel. The channels of the first, second and third race members cooperate fo form a bearing-receiving slot. The bearing is positioned to lie in the bearing-receiving slot. The first and second race members are adjustably coupled to change the respective positions of their channels. The helicopter according to the present invention further comprises the features disclosed in the characterising portion of claim 1.

The present disclosure aims to minimize one or several of the above-mentioned and other disadvantages by providing a simple and cheap solution to auto stabilize the helicopter, such that operating the helicopter becomes simpler and possibly reduces the need for long-standing experience of the pilot.

The helicopter should meet the following requirements to a greater or lesser degree:
(a) it can return to a stable hovering position, in case of an unwanted disturbance of the flight conditions. Such disturbance may occur in the form of a gust of wind, turbulences, a mechanical load change of the body or the rotors, a change of position of the body as a result of an adjustment to the cyclic variation of the pitch or angle of incidence of the propeller blades of the main rotor or a steering of the tail rotor or the like with a similar effect; and
(b) the time required to return to the stable position should be relatively short and the movement of the helicopter should be relatively small.

To this end, the disclosure concerns an improved helicopter including a body with a tail; a main rotor with propeller blades which are driven by a rotor shaft and which are hinge-mounted to the rotor shaft by means of a joint. The angle between the surface of rotation of the main rotor and the rotor shaft may vary. A tail rotor is driven by a second rotor shaft which is directed transversal to the rotor shaft of the main rotor.

The helicopter is provided with an auxiliary rotor which is driven by the shaft of the main rotor and which is provided with two vanes extending essentially in line with their longitudinal axis. The 'longitudinal' axis, is seen in the sense of rotation of the main rotor, and is essentially parallel to the longitudinal axis of at least one of the propeller blades of the main rotor or is located within a relatively small acute angle with the latter propeller blade axis. This auxiliary rotor is provided in a swinging manner on an oscillatory shaft which is provided essentially transversal to the rotor shaft of the main rotor. This is directed essentially transverse to the longitudinal axis of the vanes. The main rotor and the auxiliary rotor are connected to each other through a mechanical link, such that the swinging motions of the auxiliary rotor control the angle of incidence of at least one of the propeller blades of the main rotor.

In practice, it appears that such an improved helicopter is more stable and stabilizes itself relatively quickly with or without a restricted intervention of the user.

According to different aspect of the disclosure, the helicopter is made more stable by suspending the tail rotor with its rotor shaft in a swing which can rotate round a swing shaft. The swing shaft essentially extends in the longitudinal direction relative to the body of the helicopter.

In case of malfunction or the like, whereby the helicopter starts to turn round the rotor shaft of the main rotor in an unwanted manner, the tail rotor, as a result of the gyroscopic precession acting on the rotating tail rotor as a result of the rotation round the rotor shaft of the main rotor, should tilt round the swing shaft of the tail rotor at a certain angle.

By measuring the relative angular displacement of the swing and by using the measured signal as an input signal for a microprocessor which controls the drive of the main rotor and the drive of the tail rotor as a function of a stabilizer algorithm, the thrust of the tail rotor can be adjusted so as to counteract the unwanted effect of the disturbance and to thus automatically restore the stable flight conditions for the helicopter, with minimal or any intervention of the pilot.

In this configuration, the tail rotor is used essentially as a gyroscope, such that the gyroscope of the known helicopters can be omitted. This can also result in a lot of weight being saved.

### DRAWINGS

In order to further explain the characteristics of the disclosure, the following embodiments of an improved helicopter according to the disclosure are given as an example only, without being limitative in any way, with reference to the accompanying drawings, in which:

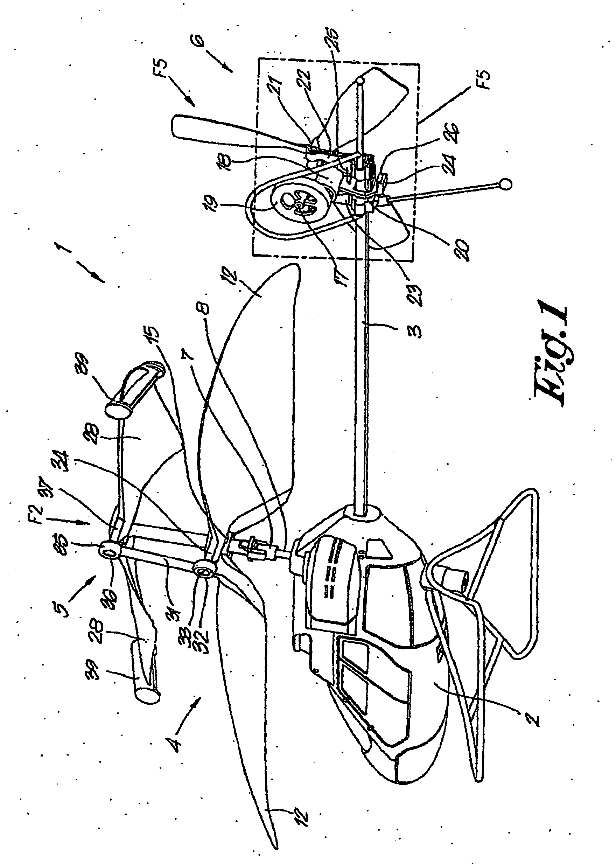

Figure 1 schematically represents a helicopter according to the disclosure in perspective;
Figure 2 represents a top view according to arrow F2 in Figure 1;

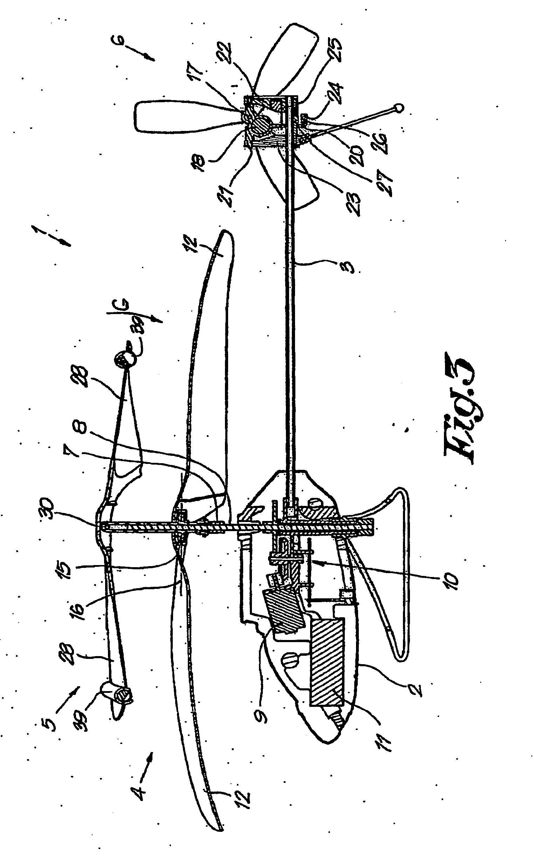

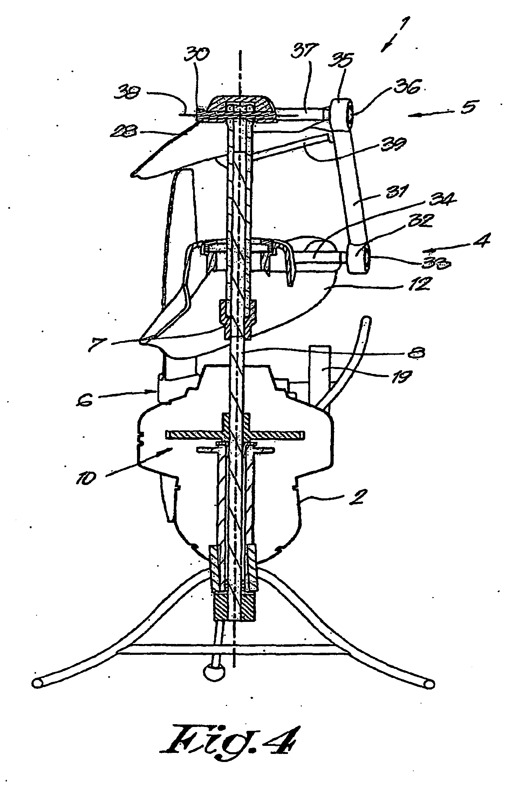

Figures 3 and 4 represent respective sections according to lines II-II and III-III in Figure 2;

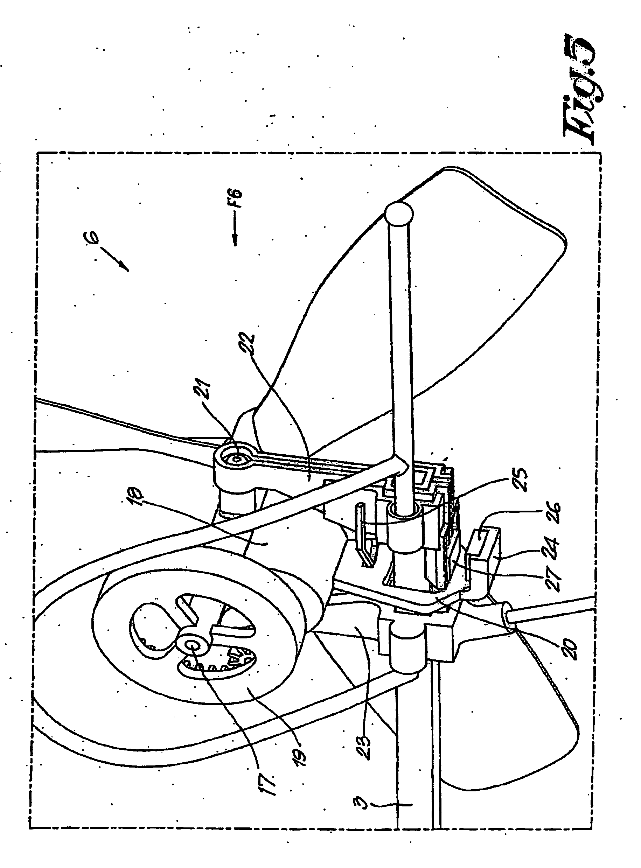

Figure 5 represents a view of the rear rotor part indicated in Figure 1 by F5 to a larger scale;
Figure 6 is a rear view according to arrow F6 in Figure 5;
Figure 7 represents a variant of Figure 1;

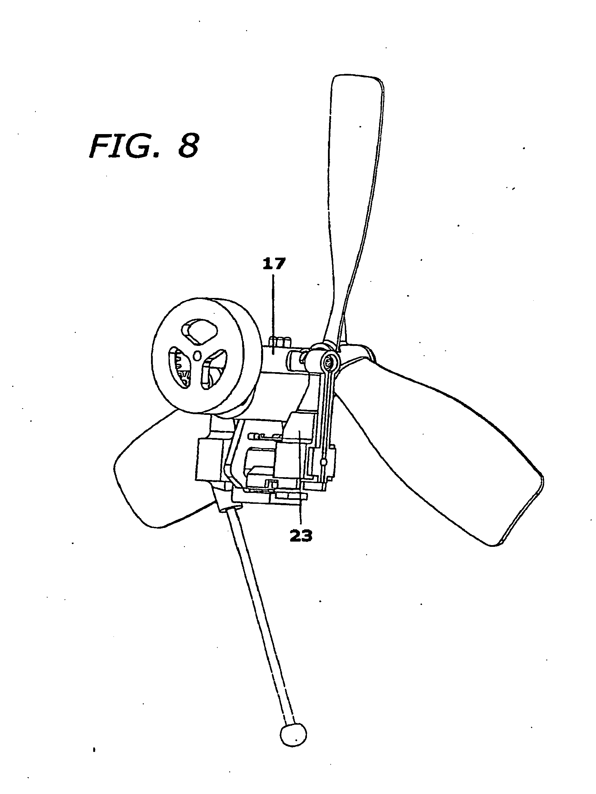

Figure 8 represents a variant of Figure 5;

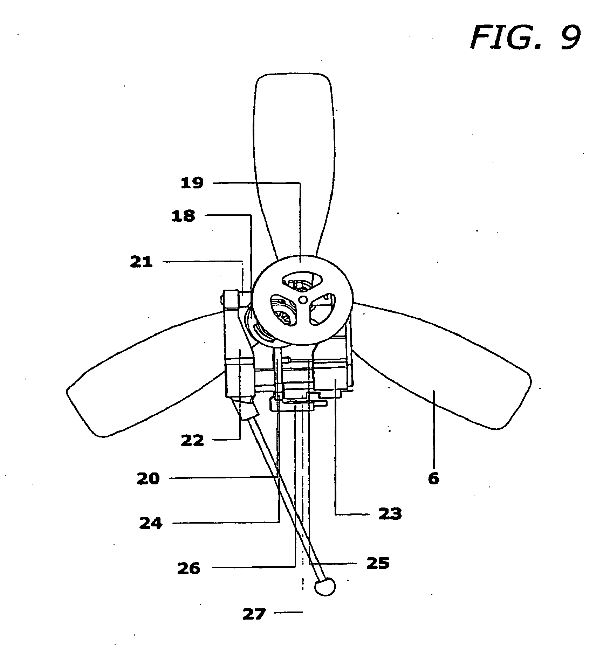

Figure 9 represents a different view of the tail rotor of Figure 8;

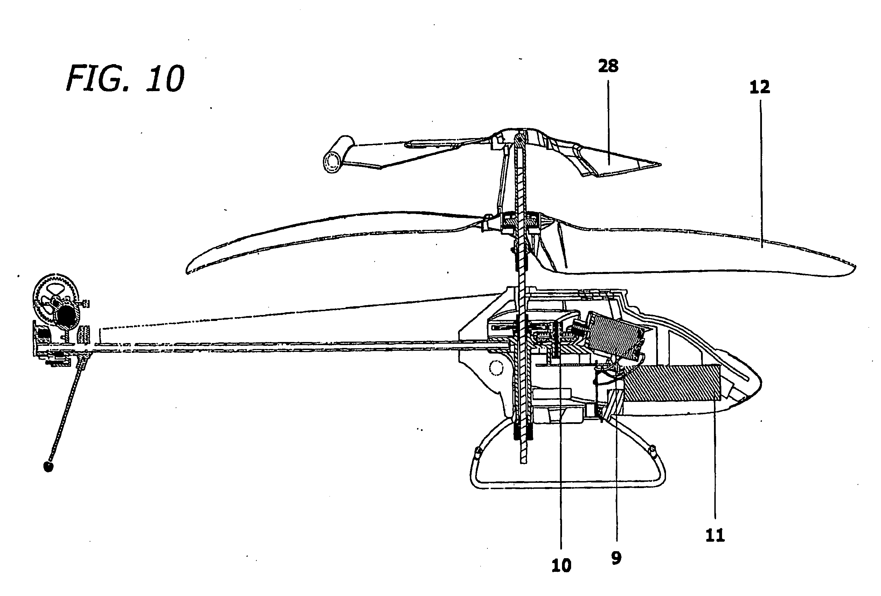

Figure 10 represents a section of the helicopter;

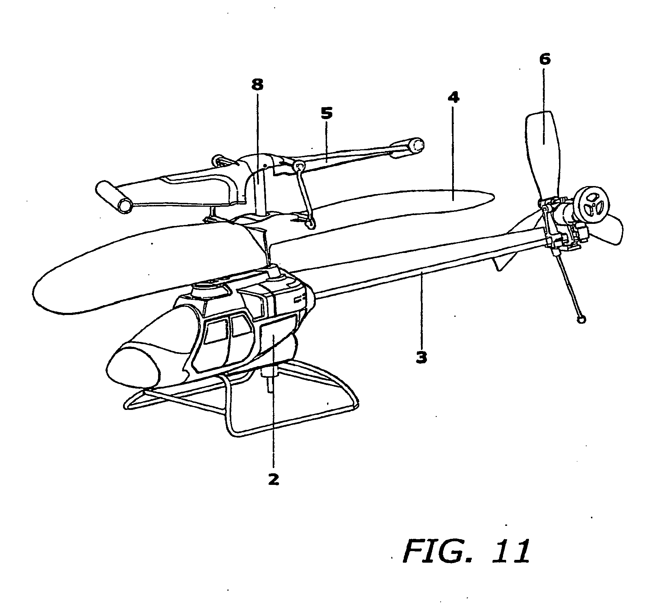

Figure 11 schematically represents an alternative view of the helicopter according to the disclosure in perspective;

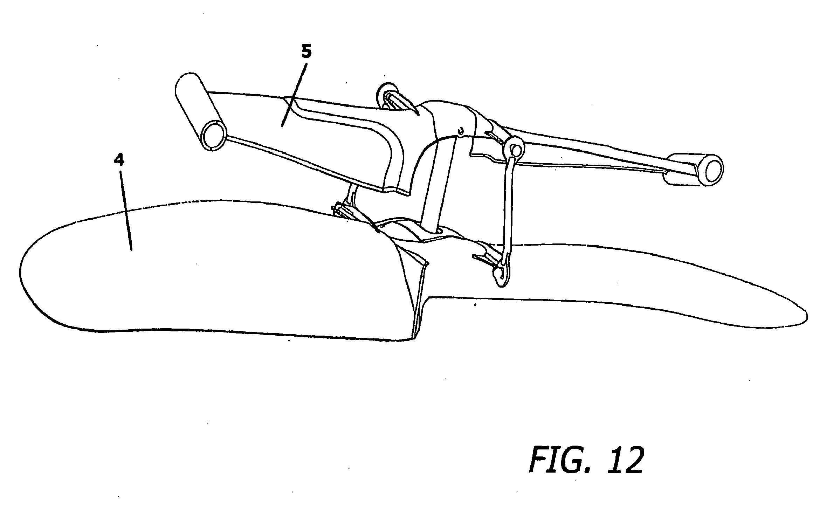

Figure 12 is a perspective view of the main rotor and auxiliary rotor.

### DETAILED DESCRIPTION

The helicopter 1 represented in the figures by way of example is a remote-controlled helicopter which essentially consists of a body 2 with a landing gear and a tail 3; a main rotor 4; an auxiliary rotor 5 driven synchronously with the latter and a tail rotor 6.

The main rotor 4 is provided by means of what is called a rotor head 7 on a first upward directed rotor shaft 8 which is bearing-mounted in the body 2 of the helicopter 1 in a rotating manner and which is driven by means of a motor 9 and a transmission 10, whereby the motor 9 is for example an electric motor which is powered by a battery 11.

The main rotor 4 in this case has two propeller blades .12 which are in line or practically in line, but which may just as well be composed of a larger number of propeller blades 12.

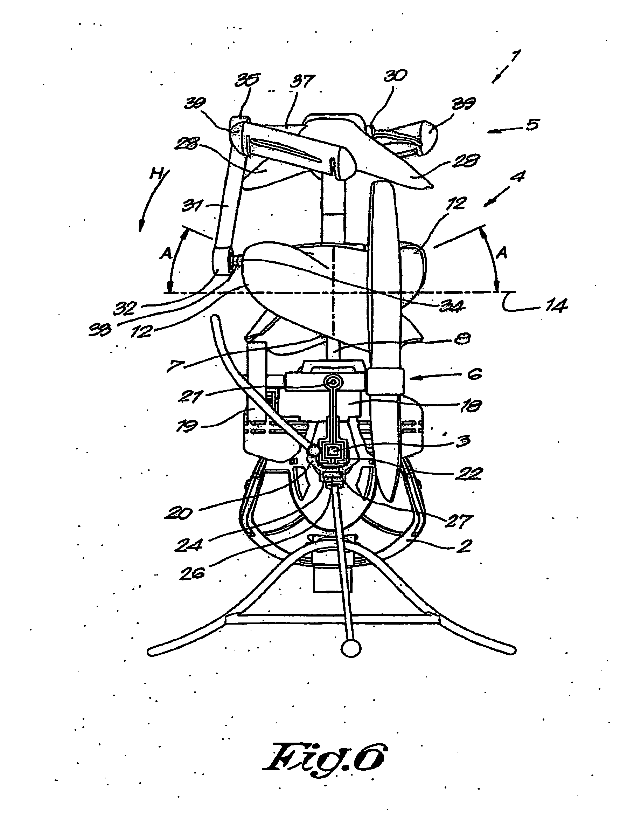

The tilt or angle of incidence A of the propeller blades 12, in other words the angle A which forms the propeller blades 12 as represented in figure 6 with the plane of rotation 14 of the main rotor 4, can be adjusted as, the main rotor 4 is hinge-mounted on this rotor shaft 8 by means of a joint, such that the angle between the plane of rotation of the main rotor and the rotor shaft may freely vary.

In the case of the example of a main rotor 4 with two propeller blades 12, the joint is formed by a spindle 15 of the rotor head 7.

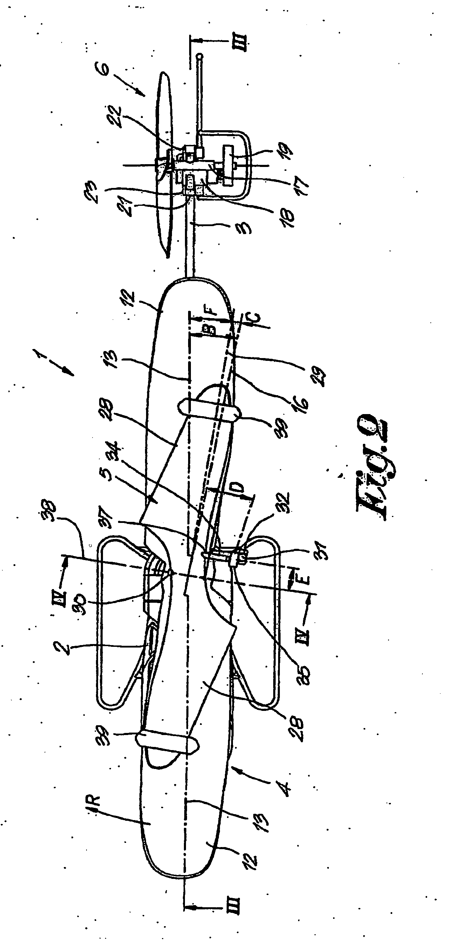

The axis 16 of this spindle 15 is directed transversal to the rotor shaft 8 and essentially extends in the direction of the longitudinal axis 13 of one of the propeller blades 12, and it preferably forms, as represented in figure 2, an acute angle B with this longitudinal axis 13.

The tail rotor 6 is driven via a second rotor shaft 17 by means of a second motor 18 and a transmission 19. Motor 16 can be an electric motor. The tail rotor 6 with its rotor shaft 17 and its drive 18-19 is suspended in a swing 20 which can rotate round a swing shaft 21 which is fixed to the tail 3 of the helicopter 1 by two supports 22 and 23.

The swing 20 is provided with an extension piece 24 towards the bottom, which is kept In a central position by means of a spring 25 when in a state of rest, whereby the second rotor shaft 17 in this position is horizontal and directed crosswise to the first rotor shaft 8.

On the lower end of the extension piece 24 of the swing 20 is provided a magnet 26, whereas opposite the position of the magnet 26 in the above-mentioned state of rest of the swing 20 is fixed a magnetic sensor 27 to the tail 3 which makes it possible to measure the relative angular displacement of the swing 20 and thus of the tail rotor 6 round the swing shaft 21.

It is clear that this angular displacement of the swing 20 can also be measured in other ways, for example by means of a potentiometer.

The measured signal can be used as an input signal 'for a control box, which is not represented in the figures, which controls the drives of the main rotor 4 and of the tail rotor 6 and which is provided with a stabilizer algorithm which will give a counter steering command when a sudden unwanted angular displacement of the tail rotor 6 is measured round the swing shaft 21, resulting from an unwanted rotation of the helicopter 1 round the rotor shaft 8, so as to restore the position of the helicopter 1.

The helicopter 1 is also provided with an auxiliary rotor 5 which is driven substantially synchronously with the main rotor 4 by the same rotor shaft 8 and the rotor head 7.

The auxiliary rotor 5 in this case has two vanes 28 which are 'essentially in line with their longitudinal axis 29, whereby the longitudinal axis 29, seen in the sense of rotation R of the main rotor 4, encloses a relatively small acute angle C with the the longitudinal axis 13 of propeller blades 12 of the main rotor 4, so that both rotors 4 and 5 extend more or less parallel on top of one another with their propeller blades 12 and vanes 28 so to say.

The diameter of the auxiliary rotor 5 is preferably smaller than the diameter of the main rotor 4 as the vanes 28 have a smaller span than the propeller blades 12, and the vanes, 28 are substantially rigidly connected to each other. This rigid whole forming the auxiliary rotor 5 is provided in a swinging manner on an oscillating shaft 30 which is fixed to the rotor head 7 of the rotor shaft 8. This is directed transversally the longitudinal axis of the vanes 28 and transversally to the rotor shaft 8.

The main rotor 4 and the auxiliary rotor 5 are connected to each other by a mechanical link which is such of the auxiliary rotor 5 the angle of incidence A of at least one of the propeller blades 12 of the main rotor 4. In the given example this link is formed of a rod 31.

This rod 31 is hinge-mounted to a propeller blade 12 of the main rotor 4 with one fastening point 32 by means of a joint 33 and a lever arm 34, and with another second fastening point 35, situated at a distance from the latter, it is hinge-mounted to a vane 28 of the auxiliary rotor 5 by means of a second joint 36 and a second lever arm 37.

The fastening point 32 on the main rotor 4 is situated at a distance D from the axis 16 of the spindle 15 of the propeller blades 12 of the main rotor 4, whereas the other fastening point 35 on the auxiliary rotor 5 is situated at a distance E from the axis 38 of the oscillatory shaft 30 of the auxiliary rotor 5.

The distance D is preferably larger than the distance E, and about the double of this distance E, and both fastening points 32 and 35 of the rod 31 are situated, seen in the sense of rotation R, on the same side of the propeller blades 12 of the main rotor 4 or of the varies 28 of the auxiliary rotor 5, in other words they are both situated in front of or at the back of the propeller blades 12 and vanes 28, seen in the sense of rotation.

Also preferably, the longitudinal axis 29 of the vanes 28 of the auxiliary rotor 5, seen in the sense of rotation R, encloses an angle F with the longitudinal axis 13 of the propeller blades 12 of the main rotor 4, which enclosed angle F is in the order, of magnitude of 10°, whereby the longitudinal axis 29 of the vanes 28 leads the longitudinal axis 13 of the propeller blades 12, seen in the sense of rotation R.

The auxiliary rotor 5 is provided with two stabilizing weights 39 which are each fixed to a vane 28 at a distance from the rotor shaft 8.

Further, the helicopter 1 is provided with a receiver, so that it can be controlled from a distance by means of a remote control which is not represented.

As a function of the type of helicopter, it is possible to search for the most appropriate values and relations of the angles B, F and G by experiment; the relation between the distances D and E; the size of the weights 39 and the relation of the diameters between the main rotor 4 and the auxiliary rotor 5 so as to guarantee a maximum auto stability.

The operation of the improved helicopter 1 according to the disclosure is as follows.

In flight, the rotors 4, 5 and 6 are driven at a certain speed, as a result of which a relative air stream is created in relation to the rotors, as a result of which the main rotor 4 generates an upward force so as to make the helicopter 1 rise or descend or maintain it at a certain height, and the tail rotor 6 develops a laterally directed force which is used to steer the helicopter 1.

It is impossible for the main rotor 4 to adjust itself, and it will turn in the plane 14 in which it has been started, usually the horizontal plane. Under the influence of gyroscopic precession, turbulence and other factors, it will take up an arbitrary undesired position if it is not controlled.

The surface of rotation of the auxiliary rotor 5 may take
up another inclination in relation to the surface of rotation 14 of the main rotor 8, whereby both rotors 5 and 4 may take up another inclination in relation to the rotor, shaft 8.

This difference in inclination may originate in any internal or external force or disturbance whatsoever.

In a situation whereby the helicopter 1 is hovering stable, on a spot in the air without any disturbing internal or external forces, the auxiliary rotor 5 keeps turning in a plane which is essentially perpendicular to the rotor shaft 8.

If, however, the body 2 is pushed out of balance due to any disturbance whatsoever, and the rotor shaft 8 turns away from its position of equilibrium, the auxiliary rotor 5 does not immediately follow this movement, since the auxiliary rotor 5 can freely move round the oscillatory shaft 30.

The main rotor 4 and the auxiliary rotor 5 are placed in relation to each other in such a manner that a swinging motion of the auxiliary rotor 5 is translated almost immediately in the pitch or angle of incidence A of the propeller blades 12 being adjusted.

For a two-bladed main rotor 4, this means that the propeller blades 12 and the vanes 28 of both rotors 4 and 5 must, seen in the sense of rotation R, enclose an acute angle with one another of for example 10° in the case of a large main rotor 4 and a smaller auxiliary rotor 5.

This angle can be calculated or determined by experiment for any helicopter 1 or per type of helicopter.

If the axis of rotation 8 takes up another inclination than the one which corresponds to the above-mentioned position of equilibrium in a situation whereby the helicopter 1 is hovering, the following happens:

A first effect is that the auxiliary rotor 5 will first try to preserve its absolute inclination, as a result of which the relative inclination of the surface of rotation of the auxiliary rotor 5 in relation to the rotor shaft 8 changes.

As a result, the rod 31 will adjust the angle of incidence A of the propeller blades 12, so that the upward force of the propeller blades 12 will increase on one side of the main rotor 4 and will decrease on the diametrically opposed side of this main rotor.

Since the relative position of the main rotor 4 and the auxiliary rotor 5 are selected such that a relatively immediate effect is obtained. This change in the upward force makes sure that the rotor shaft 8 and the body 21 are forced back into their original position of equilibrium.

A second effect is that, since the distance between the far ends of the vanes '28 and the plane of rotation 14 of the main rotor 4 is no longer equal and since also the vanes 28 cause an upward force, a larger pressure is created between the main rotor 4 and the auxiliary rotor 5 on one side of the main rotor 4 than on the diametrically opposed side.

A third effect plays a role when the helicopter begins to tilt over to the front, to the back or laterally due to a disturbance. Just as in the case of a pendulum, the helicopter will be inclined to go back to its original situation. This pendulum effect does not generate any destabilizing gyroscopic forces as with the known helicopters that are equipped with a stabilizer bar directed transversally to the propeller blades of the main rotor. It acts to reinforce the first and the second effect.

The effects have different origins but have analogous natures. They reinforce each other so as to automatically correct the position of equilibrium of the helicopter 1 without any intervention of a pilot.

The tail rotor 6 is located in a swinging manner and provides for an additional stabilization and makes it possible for the tail rotor 6 to assume the function of the gyroscope which is often used in existing helicopters, such as model helicopters.

In case of a disturbance, the body 2 may start to turn round the rotor shaft 8. As a result, the tail rotor 6 turns at an angle in one or other sense round the swinging shaft 21. This is due to the gyroscopic precession which acts on the rotating tail rotor 6 as a result of the rotation of the tail rotor 6 round the rotor shaft 8. The angular displacement is a function of the amplitude of the disturbance and thus of the rotation of the body 2 round the rotor shaft 8. This is measured by the sensor 27.

The signal of the sensor 27 is used by a control box of a computer to counteract the failure and to adjust the thrust of the tail rotor 6 so as to annul the angular displacement of the tail rotor 6 which is due to the disturbance.

This can be done by adjusting the speed of the tail rotor 6 and/or by adjusting the angles of incidence of the propeller blades of the tail rotor 6, depending on the type of helicopter 1.

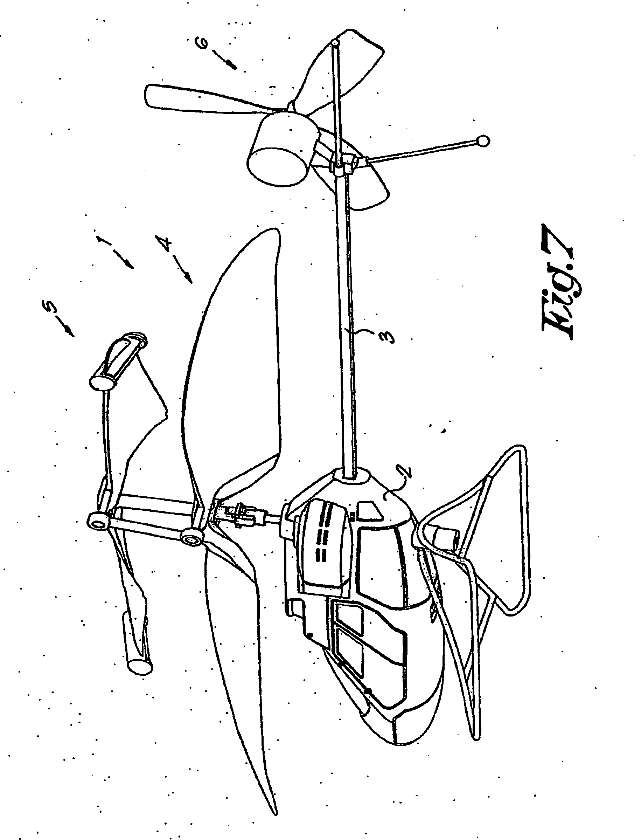

If necessary, this aspect of the disclosure may be applied separately, just as the aspect of the auxiliary rotor 5 can be applied separately, as is illustrated for example by means of figure 7, which represents a helicopter 1 according to the , disclosure having a main rotor 4 combined with an auxiliary rotor 5, but whose tail rotor 6 is of the conventional type, i.e. whose shaft cannot turn in a swing but is bearing-mounted in relation to the tail 3.

In practice, the combination of both aspects makes it possible to produce a helicopter which is, very stable in any direction and any flight situation and which is easy to control, even by persons having little or no experience.

It is clear that the main rotor 4 and the auxiliary rotor 5 must not necessarily be made as a rigid whole. The propeller blades 12 and the vanes 28 can also be provided on the rotor head 7 such that they are mounted and can rotate relatively separately. In that case, for example, two rods 31 may be applied to connect each time one propeller blade 12 to one vane 28.

It is also clear that, if necessary, the joints and hinge joints may also be realized in other ways than the ones represented, for example by means of torsion-flexible elements.

In the case of a main rotor 4 having more than two propeller blades 12, the joint of the main rotor 4 is preferably made as a spindle 15 which is directed essentially transversely to the axis of the oscillatory shaft 30 of the auxiliary rotor 5 and which essentially extends in the longitudinal direction of the one propeller blade 12 concerned.

The present disclosure is not limited to the embodiments described as an example and represented in the accompanying figures. Many different variations in size and scope and features are possible. For instance, instead of electrical motors being provided others forms of motorized power are possible. A different number of blades may be provided to the rotors.

A helicopter according to the disclosure can be made in all sorts of shapes and dimensions while still remaining within the scope of the disclosure. In this sense although the helicopter in some senses has been described as toy or model helicopter, the features described and illustrated can have use in part or whole in a full-scale helicopter.

## Claims

1. A remote control toy helicopter (1) comprising a body (2) with a tail (3), a motor (9) and a battery for the motor (9), the motor (9) being controllable by a controller remote from the body (2); a main rotor (4) with at least two propeller blades (12), wherein the propeller blades (12) define a plane of rotation of the main rotor (4), wherein the main rotor (4) is driven by a rotor shaft (8), on which the propeller blades (12) are mounted; a tail rotor (6) driven by a second rotor shaft (17) directed transversely to the rotor shaft (8) of the main rotor (4); an auxiliary rotor (5) provided with two vanes (28) and driven by the rotor shaft (18) of the main rotor (4) in the rotational sense of the main rotor (4), wherein auxiliary rotor (5) has a first longitudinal axis (29) which runs through the rotor shaft (8), and wherein the main rotor (4) has a second longitudinal axis (13) extending from the end of one of the propeller blades (12) towards the rotor shaft (8), the auxiliary rotor (5) being mounted such that first longitudinal axis (29) is situated in an acute angle relative to the second longitudinal axis (13), the acute angle being determined when viewed from above the plane of rotation, the auxiliary rotor (4) having a further plane of rotation being spaced from the plane of rotation, the main rotor (4) and the auxiliary rotor (5) being linked with each other by a mechanical link (31), such that the auxiliary rotor (5) is mounted in a swinging relationship on an oscillatory shaft (30) provided essentially transversally to the rotor shaft (8) of the main rotor (4) and being directed essentially transversally to the longitudinal axis (29) of the vanes (28), the swinging motion being relatively upwards and downwards around the oscillatory shaft (30), such that the swinging motion of the auxiliary rotor (5) controls an angle of incidence of the propeller blades (12) of the main rotor (4), propeller blades (12) of the main rotor (4) are mounted pivotably on a joint formed by a spindle (15) which is fixed on the rotor shaft (8) of the main rotor (40) and extends along the second longitudinal axis (13), **characterized in that** each propeller blade (12) has an upper surface formed in the form of an upwardly convex curve, running from essentially a tip of the propeller blade (10) towards the rotor shaft (8) and wherein each of the propeller blades (12) has a convex upper surface along the second longitudinal axis (13), the upper surface being convex from a leading edge to a trailing edge of the blade, and wherein each propeller blade (12) has a concave lower surface along the second longitudinal axis and the lower surface being concave from the leading edge to the trailing edge of the blade throughout a substantial portion of the second longitudinal axis (13) of the blade.

2. A helicopter according to claim 1 wherein the propeller blades (12) of the main rotor (4) are essentially in line with each other.

3. A helicopter according to either claim I or claim 2 wherein there is a single plane of rotation of the main rotor (4) is defined by the plane of rotation of the second longitudinal axis (13) running through the spindle (15).

4. A helicopter according to any one of claims 1 to 3 wherein the auxiliary rotor (5) has two vanes (28) extending essentially in accordance with the first longitudinal axis (29).

5. A helicopter according to anyone of claim 1 to 4 wherein the first longitudinal axis (29) of the auxiliary rotor (5) is in the sense of rotation (R) in front of the second longitudinal axis (13) of the propeller blades (12).

6. A helicopter according to anyone of claims 1 to 5 wherein the auxiliary rotor (5) is a rigid whole mounted pivotably around the oscillatory shaft (30).

7. A helicopter according to anyone of claims 1 to 6 wherein the main rotor (4) is a unitary one piece body.

8. A helicopter according to anyone of claims 1 to 7 wherein the propeller blades (12) are essentially rigidly connected with each other.

9. A helicopter according to anyone of claims 1 to 8 wherein the rotor shaft (8) extends through an aperture in the main rotor (4).

10. A helicopter according to anyone of claims 1 to 9 wherein the plane of rotation of the auxiliary rotor (5) is above the plane of rotation of the main rotor (4).

11. A helicopter according to anyone of claims 1 to 11 wherein the main rotor (4) is a rigid whole.

12. A helicopter according to anyone of claims 1 to 11 wherein the mechanical link includes a rod hinge mounted to the auxiliary rotor (5) with one fastening point and is hinge-mounted with another fastening point to the propeller blade (12) of the main rotor (4).

13. A helicopter according to claim 12 wherein the fastening point of the rod is situated on the main rotor (5) at a distance from the axis of the spindle (15) of the propeller blades (12) of the main rotor (5), and the other fastening point of the rod is situated on the auxiliary rotor (4) at a distance from the axis of the oscillatory shaft (30) of the auxiliary rotor (4).

14. A helicopter according to claim 13 wherein the distance between the fastening point of the rod on the main rotor (5) and the axis of the spindle (15) of the propeller blades (12) of the main rotor (5) is larger than the distance between the fastening point of the rod on the auxiliary rotor (4) and the axis of the oscillatory shaft (30) of the auxiliary rotor (4).

15. A helicopter according to claim 13 or 14 wherein the distance between the fastening point of the rod on the main rotor (5) and the axis of the spindle (15) of the propeller blades (12) of the main rotor (5) is about the double the distance between the other fastening point on the auxiliary rotor (4) and the axis of the oscillatory shaft (30) of the auxiliary rotor (4).

16. A helicopter according to claim 12 wherein the rod is fixed to lever arms with its fastening point respectively part of the main rotor (5) and of the auxiliary rotor (4).

## Patentansprüche

1. Ferngesteuerter Spielzeug-Helikopter (1), mit einem Grundkörper (2) mit einem Heck (3), mit einem Motor (9) und mit einer Batterie für den Motor (9), wobei der Motor (9) durch eine Steuerung steuerbar ist, die von dem Grundkörper (2) entfernt angeordnet ist; mit einem Hauptrotor (4), der zumindest zwei Rotorblätter (12) aufweist, wobei die Rotorblätter (12) eine Rotationsebene des Hauptrotors (4) definieren, wobei der Hauptrotor (4) durch eine Rotorachse (8) angetrieben ist, an der die Rotorblätter (12) montiert sind; mit einem Heckrotor (6), der durch eine zweite Rotorachse (17) angetrieben ist, die transversal zu der Rotorachse (8) des Hauptrotors (4) ausgerichtet ist; mit einem Hilfsrotor (5), der mit zwei Schaufeln (28) versehen ist und der durch die Rotorachse (8) des Hauptrotors (4) im Drehsinn des Hauptrotors (4) angetrieben ist, wobei der Hilfsrotor (5) eine erste Längsachse (29) hat, die durch die Rotorachse (8) verläuft, und wobei der Hauptrotor (4) eine zweite Längsachse (13) hat, die sich von einem Ende von einem der Rotorblätter (12) in Richtung der Rotorachse (8) erstreckt, wobei der Hilfsrotor (5) derart montiert ist, dass sich die erste Längsachse (29) in einem spitzen Winkel relativ zu der zweiten Längsachse (13) befindet, wobei der spitze Winkel bestimmt wird, wenn man von oberhalb auf die Rotationsebene blickt, sowie der Hilfsrotor (5) eine weitere Rotationsebene hat, die von der Rotationsebene beabstandet ist, wobei der Hauptrotor (4) und der Hilfsrotor (5) durch eine mechanische Verbindung (31) miteinander verbunden sind, so dass der Hilfsrotor (5) in einer schwingenden Relation an einer oszillierenden Achse (30) montiert ist, die im Wesentlichen transversal zu der Rotorachse (8) des Hauptrotors (4) und die im Wesentlichen transversal zu der Längsachse (29) der Schaufeln (28) ausgerichtet ist, und wobei die schwingende Bewegung relativ aufwärts und abwärts rund um die oszillierende Achse (30) ist, so dass die schwingende Bewegung des Hilfsrotors (5) einen Ereigniswinkel der Rotorblätter (12) des Hauptrotors (4) steuert, wobei die Rotorblätter (12) des Hauptrotors (4) verschwenkbar an einem Gelenk montiert sind, welches durch eine Spindel (15) ausgebildet ist, die an der Rotorachse (8) des Hauptrotors (4) fixiert ist und die sich entlang der zweiten Längsachse (13) erstreckt, **dadurch gekennzeichnet, dass** jedes Rotorblatt (12) eine obere Oberfläche hat, die in der Form einer nach oben gekrümmten konvexen Kurve verläuft, ausgehend von im Wesentlichen der Spitze des Rotorblattes (10) in Richtung der Rotorachse (8), und wobei jedes der Rotorblätter (12) eine im Wesentlichen konvexe obere Oberfläche hat, entlang der zweiten Längsachse (13), wobei die obere Oberfläche von einer führenden Kante aus in Richtung der nachlaufenden Kante des Blattes konvex ausgebildet ist, und wobei jedes Rotorblatt (12) eine im Wesentlichen konkave untere Oberfläche hat, entlang der zweiten Längsachse und wobei die untere Oberfläche von einer führenden Kante aus in Richtung der nachlaufenden Kante des Blattes konkav ausgebildet ist, über einen Wesentlichen Abschnitt der zweiten Längsachse (13) des Blattes.

2. Helikopter nach Anspruch 1, wobei die Rotorblätter (12) des Hauptrotors (4) im Wesentlichen in einer Linie zueinander ausgerichtet sind.

3. Helikopter nach Anspruch 1 oder 2, wobei es eine einzige Rotationsebene des Hauptrotors (4) gibt, die durch die Rotationsebene der zweiten Längsachse (13) definiert ist, die durch die Spindel (15) verläuft).

4. Helikopter nach irgendeinem der Ansprüche 1 bis 3, wobei der Hilfsrotor (5) zwei Schaufeln (28) hat, die sich im Wesentlichen in Übereinstimmung mit der ersten Längsachse (29) erstrecken.

5. Helikopter nach irgendeinem der Ansprüche 1 bis 4, wobei sich die erste Längsachse (29) des Hilfsrotors (5) im Drehsinn (R) vor der zweiten Längsachse (13) der Rotorblätter (12) befindet.

6. Helikopter nach irgendeinem der Ansprüche 1 bis 5, wobei der Hilfsrotor (5) ein steifes Ganzes ist, welches verschwenkbar rund um die oszillierende Achse (30) montiert ist.

7. Helikopter nach irgendeinem der Ansprüche 1 bis 6, wobei der Hauptrotor (4) ein einstückiger Körper ist.

8. Helikopter nach irgendeinem der Ansprüche 1 bis 7, wobei die Rotorblätter (12) im Wesentlichen steif miteinander verbunden sind.

9. Helikopter nach irgendeinem der Ansprüche 1 bis 8, wobei sich die Rotorachse (8) durch eine Öffnung in dem Hauptrotor (4) hindurch erstreckt.

10. Helikopter nach irgendeinem der Ansprüche 1 bis 9, wobei die Rotationsebene des Hilfsrotors (5) oberhalb der Rotationsebene des Hauptrotors (4) liegt.

11. Helikopter nach irgendeinem der Ansprüche 1 bis 10, wobei der Hauptrotor (4) ein steifes Ganzes ist.

12. Helikopter nach irgendeinem der Ansprüche 1 bis 11, wobei die mechanische Verbindung ein Stabgelenk ist, welches mit einem Befestigungspunkt an dem Hilfsrotor (5) montiert ist und welches mit einem anderen Befestigungspunkt an dem Rotorblatt (12) des Hauptrotors (4) gelenkmontiert ist.

13. Helikopter nach Anspruch 12, wobei der Befestigungspunkt des Stabes an dem Hauptrotor (5) in einem Abstand von der Achse der Spindel (15) der Rotorblätter (12) des Hauptrotors (5) angeordnet ist, sowie der andere Befestigungspunkt des Stabes an dem Hilfsrotor (4) von der Achse der oszillierenden Achse (30) des Hilfsrotors (4) in einem Abstand angeordnet ist.

14. Helikopter nach Anspruch 13, wobei der Abstand zwischen dem Befestigungspunkt des Stabes an dem Hauptrotor (5) und der Achse der Spindel (15) der Rotorblätter (12) des Hauptrotors (5) größer ist als der Abstand zwischen dem Befestigungspunkt des Stabes an dem Hilfsrotor (4) und der Achse der oszillierenden Achse (30) des Hilfsrotors (4).

15. Helikopter nach Anspruch 13 oder 14, wobei der Abstand zwischen dem Befestigungspunkt des Stabes an dem Hauptrotor (5) und der Achse der Spindel (15) der Rotorblätter (12) des Hauptrotors (5) etwa doppelt so groß ist wie der Abstand zwischen dem anderen Befestigungspunkt des Stabes an dem Hilfsrotor (4) und der Achse der oszillierenden Achse (30) des Hilfsrotors (4).

16. Helikopter nach Anspruch 12, wobei der Stab an Hebelarmen fixiert ist, wobei der Befestigungspunkt jeweils ein Teil des Hauptrotors (5) und des Hilfsrotors (4) ist.

## Revendications

1. Hélicoptère d'aéromodélisme télécommandé (1) comprenant un corps (2) doté d'une queue (3), un moteur (9) et une batterie pour le moteur (9), le moteur (9) étant commandé par une commande située à distance du corps (2) ; un rotor principal (4) doté d'au moins deux pales d'hélice (12), les pales d'hélice (12) définissant un plan de rotation du rotor principal (4), le rotor principal (4) est entraîné par un arbre de rotor (8), sur lequel les pales d'hélice (12) sont montées ; un rotor de queue (6) entraîné par un second arbre de rotor (17) dirigé transversalement à l'arbre de rotor (8) du rotor principal (4) ; un rotor auxiliaire (5) doté de deux lames (28) et entraîné par l'arbre de rotor (18) du rotor principal (4) dans le sens de rotation du rotor principal (4), le rotor auxiliaire (5) ayant un premier axe longitudinal (29) s'étendant à travers l'arbre de rotor (8), et le rotor principal (4) a un second axe longitudinal (13) s'étendant depuis l'extrémité de l'une des pales d'hélice (12) en direction de l'arbre de rotor (8), le rotor auxiliaire (5) étant monté de telle sorte que le premier axe longitudinal (29) forme un angle aigu avec le second axe longitudinal (13), l'angle aigu étant défini en observant le plan de rotation depuis le haut, le rotor auxiliaire (4) ayant un autre plan de rotation espacé du plan de rotation, le rotor principal (4) et le rotor auxiliaire (5) étant reliés l'un à l'autre par une liaison mécanique (31), de sorte que le rotor auxiliaire (5) est monté dans une relation d'oscillation sur un arbre oscillant (30) placé sensiblement transversalement à l'arbre de rotor (8) du rotor principal (4) et étant dirigé sensiblement transversalement à l'axe longitudinal (29) des lames (28), le mouvement d'oscillation se faisant relativement vers le haut et vers le bas autour de l'arbre oscillant (30), de sorte que le mouvement d'oscillation du rotor auxiliaire (5) contrôle un angle d'incidence des pales d'hélice (12) du rotor principal (4), les lames d'hélice (12) du rotor principal (4) sont montées, de façon à pouvoir pivoter, sur une articulation formée par une broche (15) qui est fixée sur l'arbre de rotor (8) du rotor principal (40) et qui s'étend le long du second axe longitudinal (13), **caractérisé en ce que** chaque pale d'hélice (12) a une surface supérieure ayant la forme d'une courbe convexe vers le haut, s'étendant sensiblement d'une pointe de la pale d'hélice (10) vers l'arbre de rotor (8), chacune des pales d'hélice (12) présente une surface supérieure sensiblement convexe qui s'étend suivant le second axe longitudinal (13), la surface supérieure étant convexe d'un bord avant vers un bord arrière de la pale, et chaque pale d'hélice (12) a une surface inférieure concave qui s'étend suivant le second axe longitudinal et la surface inférieure étant concave du bord avant au bord arrière de la pale sur une partie importante du second axe longitudinal (13) de la pale.

2. Hélicoptère selon la revendication 1, dans lequel les pales d'hélice (12) du rotor principal (4) sont sensiblement alignées l'une avec l'autre.

3. Hélicoptère selon la revendication 1 ou la revendication 2, dans lequel il n'y a qu'un seul plan de rotation du rotor principal (4) qui est défini par le plan de rotation du second axe longitudinal (13) passant par la broche (15).

4. Hélicoptère selon l'une quelconque des revendications 1 à 3, dans lequel le rotor auxiliaire (5) possède deux lames (28) s'étendant sensiblement suivant le premier axe longitudinal (29).

5. Hélicoptère selon l'une quelconque des revendications 1 à 4, dans lequel le premier axe longitudinal (29) du rotor auxiliaire (5) est dans le sens de rotation (R) devant le second axe de longitudinal (13) des pales d'hélice (12).

6. Hélicoptère selon l'une quelconque des revendications 1 à 5, dans lequel le rotor auxiliaire (5) est une unité rigide montée de façon à pouvoir pivoter autour de l'arbre oscillant (30).

7. Hélicoptère selon l'une quelconque des revendications 1 à 6, dans lequel le rotor principal (4) est un corps unitaire d'une seule pièce.

8. Hélicoptère selon l'une quelconque des revendications 1 à 7, dans lequel les pales d'hélice (12) sont raccordées sensiblement rigidement l'une à l'autre.

9. Hélicoptère selon l'une quelconque des revendications 1 à 8, dans lequel l'arbre de rotor (8) s'étend à travers une ouverture ménagée dans le rotor principal (4).

10. Hélicoptère selon l'une quelconque des revendications 1 à 9, dans lequel le plan de rotation du rotor auxiliaire (5) est situé au-dessus du plan de rotation du rotor principal (4).

11. Hélicoptère selon l'une quelconque des revendications 1 à 11, dans lequel le rotor principal (4) est une unité rigide.

12. Hélicoptère selon l'une des revendications 1 à 11, dans lequel la liaison mécanique inclut une articulation à tige montée sur le rotor auxiliaire (5) avec un point de fixation et est montée de façon articulée, avec un autre point de fixation, sur la pale d'hélice (12) du rotor principal (4).

13. Hélicoptère selon la revendication 12, dans lequel le point de fixation de la tige est situé sur le rotor principal (5) à une distance de l'axe de la broche (15) des lames d'hélice (12) du rotor principal (5), et l'autre point de fixation de la tige est située sur le rotor auxiliaire (4) à une distance de l'axe de l'arbre oscillant (30) du rotor auxiliaire (4).

14. Hélicoptère selon la revendication 13, dans lequel la distance entre le point de fixation de la tige sur le rotor principal (5) et l'axe de la broche (15) pales d'hélice (12) du rotor principal (5) est plus grande que la distance entre le point de fixation de la tige sur le rotor auxiliaire (4) et l'axe de l'arbre oscillant (30) du rotor auxiliaire (4).

15. Hélicoptère selon la revendication 13 ou 14, dans lequel la distance entre le point de fixation de la tige sur le rotor principal (5) et l'axe de la broche (15) des pales d'hélice (12) du rotor principal (5) est environ le double de la distance entre l'autre point de fixation sur le rotor auxiliaire (4) et l'axe de l'arbre oscillant (30) du rotor auxiliaire (4).

16. Hélicoptère selon la revendication 12, dans lequel la tige est fixée à des bras de levier dont les points de fixation font partie respectivement du rotor principal (5) et du rotor auxiliaire (4).
